# EUROPEAN PATENT SPECIFICATION

(11) **EP 2 999 840 B1**
(45) Date of publication and mention of the grant of the patent: **26.12.2018**
(21) Application number: 14744202.4
(22) Date of filing: 16.05.2014
(51) Int. Cl.: E06B 3/10, E06B 3/263

(54) **HIGH THERMAL INSULATION CLOSURE FOR BUILDINGS**
VERSCHLUSS MIT HOHER WÄRMEDÄMMUNG FÜR GEBÄUDE
FERMETURE À ISOLATION THERMIQUE ÉLEVÉE DESTINÉE À DES BÂTIMENTS

(30) Priority: 20.05.2013 IT LC20130003
(43) Date of publication of application: 30.03.2016
(73) Proprietor: LA COLLA, Giovanni, 23851 Galbiate (LC) (IT)
(72) Inventor: LA COLLA, Giovanni, 23851 Galbiate (LC) (IT)
(74) Representative: Brunacci, Marco
(86) International application number: PCT/IT2014/000133
(87) International publication number: WO 2014/188460

(56) References cited:
- DE-A1- 10 027 462
- DE-A1-102011 106 259
- DE-U1- 20 102 772
- DE-U1-202010 000 433

## Description

### TECHNICAL FIELD

The present invention relates to a high thermal insulation closure in accordance with the preamble of claim 1. In particular, the invention relates to a closure able to improve the characteristics of thermal insulation and acoustic insulation of closures.

In the following description and claims, the term "closure" means each of the elements that are used to close the external (or internal) apertures of a building such as doors or windows. Generally, a closure comprises a frame secured to the building wall and at least a leaf articulated to the frame and rotatable between a closed position and an open position.

### BACKGROUND ART

EP 1 239 109 discloses a closure made from a multilayer material having two outer layers of wood and an inner layer of an agglomerate cork glued between the layers of wood. The inner layer of agglomerate may be composed of more layers of wood alternating with layers of cork to increase the thermal insulation.

A problem of the closure disclosed in EP 1 239 109 is detectable in the fact that the bonding of the cork to the wood does not ensure sufficient adhesion properties between the layers which vitiate the overall tightness of the closure. It should be noted also that the cork, although economic as material, has insulating properties is not sufficient to ensure high energy efficiency, especially in certain geographical areas subject to extremely hard winters.

DE 10 2011 1062 59 describes a closure for wooden windows in which jambs and rails of the frame are made of plywood and include a plurality of longitudinal milled grooves to be filled with insulating material, in particular expanded polyurethane foam. The use of polyurethane foam in such a solution cannot, however, guarantee a thermal transmittance (UF) of less than 1.4 W/mqk. The polyurethane foam also has the defect that, with the passage of time, it tends to decompose leading to rotting of the adjacent lamellar layers and forcing, after a few years, the complete replacement of the closure. DE 10 2011 106259 A1 discloses the features of the preamble of claim 1.

### DISCLOSURE OF INVENTION

The applicant has discovered that in order to avoid the problems discussed above, it is possible to replace the insulating layer with a different material with excellent adhesion property to adhesives and excellent properties of thermal and acoustic insulation which ensures a greater useful life to the closure and without introducing substantial changes to process of assembly of the closures, thus not impairing the overall production costs.

The invention therefore relates to a closure comprising a frame and a leaf hinged to the frame and movable with respect thereto, in which the frame and/or the leaf comprise at least one layer of Aerogel.

The features and advantages of the closure according to the present invention will be made apparent by the following detailed description of some exemplary embodiments thereof, provided merely by way of non-limiting examples, description that will be conducted by making reference to the attached drawings, wherein:
- Figure 1 is a front view of a closure for use as a window in accordance with the present invention,
- Figure 2 is a front view of a closure for use as a door in accordance with the present invention,
- Figure 3 is a perspective view of a detail of the closure of Figure 1,
- Figure 4 is an exploded view of Figure 3,
- Figure 5a is a perspective view of the lower part of the leaf of the closure of Figure 1 with jamb and rail separated from each other,
- Figure 5b represents a view of Figure 5a with jamb and rail joined together,
- Figure 6a represents a perspective view of the lower part of the closure frame of Figure 1 with jamb and rail separated from each other,
- Figure 6b represents a view of Figure 6a with jamb and rail joined together;
- Figure 7 represents a transversal cross section view of the closure of Figure 1,
- Figure 8 is a transversal horizontal cross section view of the central portion of the leafs of the closure of Figure 2,
- Figure 9 represents a vertical cross section view of the lower part of the leaf of Figure 2,
- Figure 10 is a perspective view of a further embodiment of the rail of the closure in accordance with the present invention.

### DETAILED DESCRIPTION

With reference to the attached figures, with 10 is globally indicated a high thermal insulation closure for buildings in accordance with the present invention.

First of all, it should be noted that the closure 10 can be produced, depending on the requirement, for use as a door or window trough processes known to person skilled in the art.

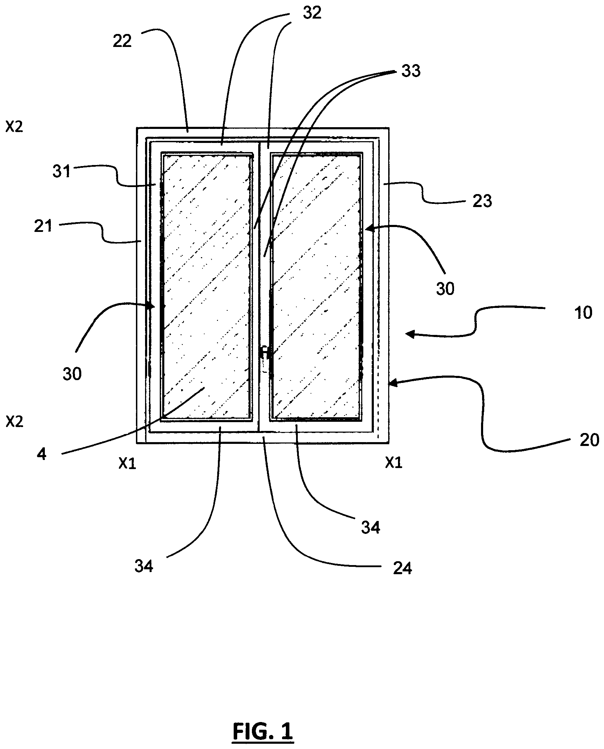

With reference to the example shown in Figure 1, the closure 10 is made for use as a window and comprises a frame 20 and a leaf 30 joined in an articulated manner to the frame 20 in order to rotate between an open position and a closed position, the frame being joinable to the wall of a building (usually during the operations of replacement of the closure or during the operations of construction of the building itself).

The frame 20 is made by joining two frame jambs and two frame rails between them to form a generally quadrilateral structure. In particular, the frame 20 comprises two side frame jambs 21,23, an upper frame rail 22 and a lower frame rail 24.

Similarly, the leaf 30 of the closure 10 is made by joining two frame jambs and two frame rails between them. In particular, the leaf 30 comprises two side leaf jambs s 31,33 an upper leaf rail 32 and a lower leaf rail 34. Rail 31,32,33,34 of the leaf 30 acts as a seat for one or more glass sheets or insulated glass sheets.

Preferably, jambs 21,23,31,33 and rails 22,24,32,34 can be made of wood, aluminum, PVC, steel.

In one version, jambs 21,23,31,33 and rails 22,24,32,34 are made of solid wood by gluing or more layers of laminated wood according to known techniques.

Preferably, each jamb 21,23,31,33 and each rail 22,24,32,34 of the leaf 30 and/or of the frame 20 is constituted of a number of layers of laminated wood comprised between three and five.

Preferably, each jamb 21,23,31,33 and each rails 22,24,32,34 of the leaf 30 and/or of the frame 20 is constituted of no more than three layers of laminated wood glued together.

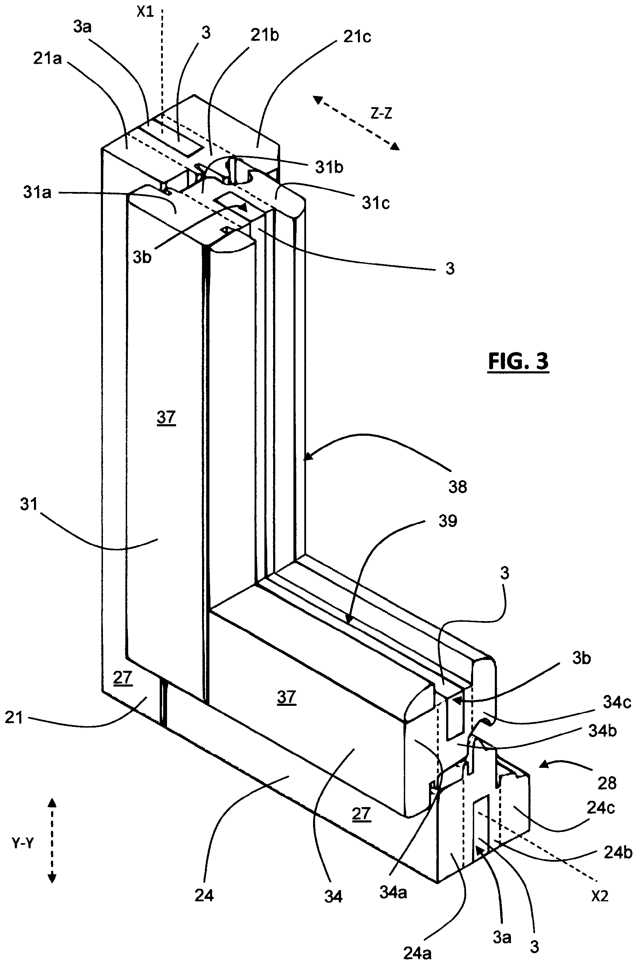

As shown in the example of Figure 3, the frame jamb 21 comprises three layers of laminated wood 21a,21b, 21c, the lower frame rail 24 comprises three layers of laminated wood 24a,24b,24c, the leaf jamb 31 comprises three layers of wood lamellar 31a, 31b,31c and the leaf rail 34 comprises three layers of laminated wood 34a,34b,34c. Similarly, although not illustrated, the frame jamb 23 comprises three layers of laminated wood, the frame rail 22 comprises three layers of laminated wood, the leaf jamb 33 comprises three layers of laminated wood and the leaf rail 32 comprises three layers of laminated wood. Thickness of laminated layers is identified by the dashed lines of Figure 3.

In use, side frame jambs 21,23 have hinge means (not shown) for receiving corresponding hinge means (not shown) provided on the leaf 30.

It should be noted that, with reference to the example shown in Figure 1, the window comprises two substantially specular leaf 30 in which each side leaf jambs 31 has hinge means articulable to the hinge means of the frame 20 for the rotary movement of the leaf 30 with respect to frame 20. Obviously, for a skilled in the art it will be clear that a window or door can be realized with only one leaf or that the hinge means can be arranged at the rails to use the window or door as "vasistas".

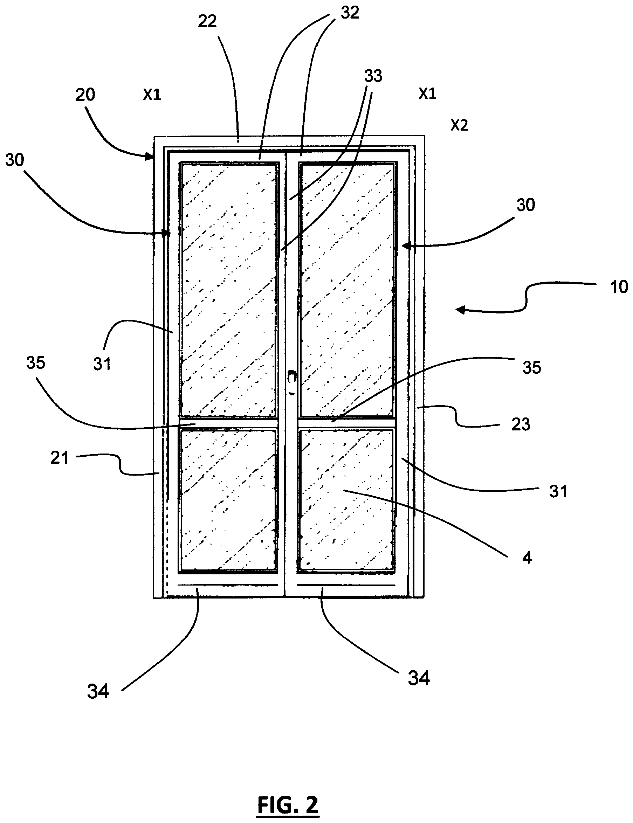

With reference to the example shown in Figure 2, the closure 10 is made for use as a door. The structure of the closure 10 as door is substantially similar to the closure as window as described above. In the version shown in Figure 2, differently, the frame 10 comprises two frame jambs 21,23 joined together by an upper rail 22 to form a substantially quadrilateral structure connected to the wall of a building. In this embodiment, the closure 10 for using as a door does not have the lower rail.

Again with reference to the version shown in Figure 2, each leaf 30 may present a horizontal separating rail 35. In this way, each leaf 30 can have two sheets of glass 4 arranged one above the other.

With reference to the example shown in Figure 3, it should be noted that the frame 20 identifies a first lateral face 27 and a second lateral face 28 parallel to each other and, similarly, the leaf 30 identifies a first lateral face 37 and a second lateral face 38 parallel to each other (described in detail in the following description with reference to the respective embodiments).

Conventionally, the second lateral faces 28,38 are the surfaces facing the outside of the closure 10. In particular, the first lateral face 27,37 is the surface internally faced with respect to the building while the second lateral face 28,38 is the surface externally faced with respect to the building.

Advantageously, jambs 21,23,31,33 and rails 22,24,32,34 extend mainly along its own longitudinal direction X₁,X₂, and comprise, between the lateral faces 27,28 and 37,38 at least one layer 3 of Aerogel in order to increase the overall thermal insulation of the closure 10.

In the following description and claims, "Aerogel" refers to solid foam with open cells, mesoporous, constituted of a network of nano interconnected structures and which exhibits a porosity of not less than 50%. The term "mesoporous" refers to materials which contain a number of pores from 2 to 50 nm in diameter.

Aerogel is therefore a lightweight material having a density of less than 10 mg/cm³. It is characterized by high resistance to fire, water-impermeable and vapor permeable (breathable). It has excellent thermal-acoustic characteristics (0,013 lambda and sound insulation of 53 dB). The characteristics that distinguish it also make it unique: very low thermal conductivity and equal thermal resistance in a fraction of the thickness. It has great flexibility and resistance to compression (up to 50 psi), hydrophobic but breathable.

In the following description, the invention will be described referring in particular to the side frame jamb 21 and lower frame rail 24, to the side leaf jamb 31 and lower leaf rail 34. The features described below are however effective also with reference to all the other rails and jambs of the frame 10, the latter being different only for small construction and/or structural details known to a person skilled in the art.

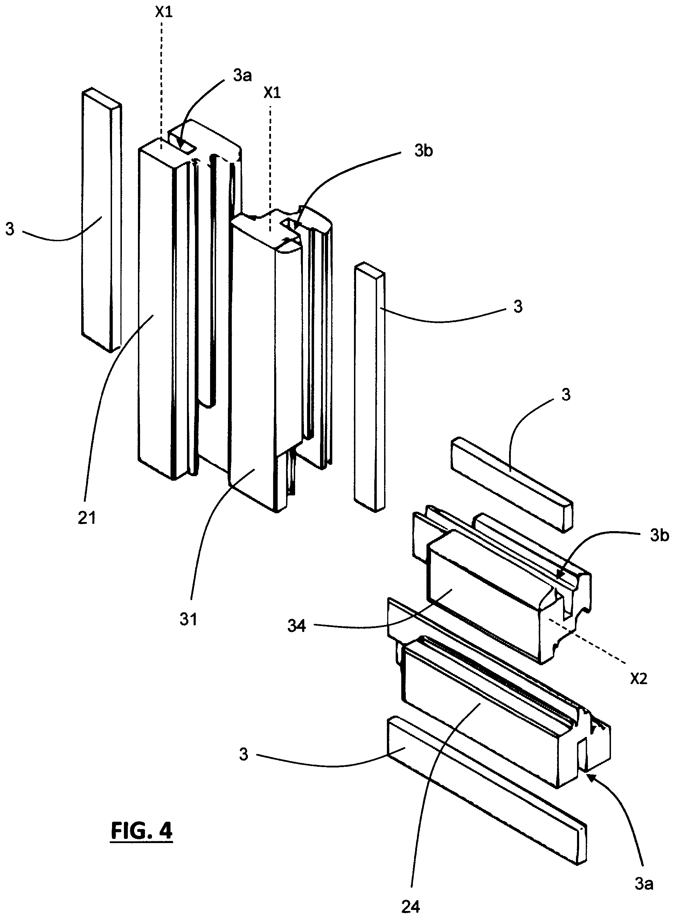

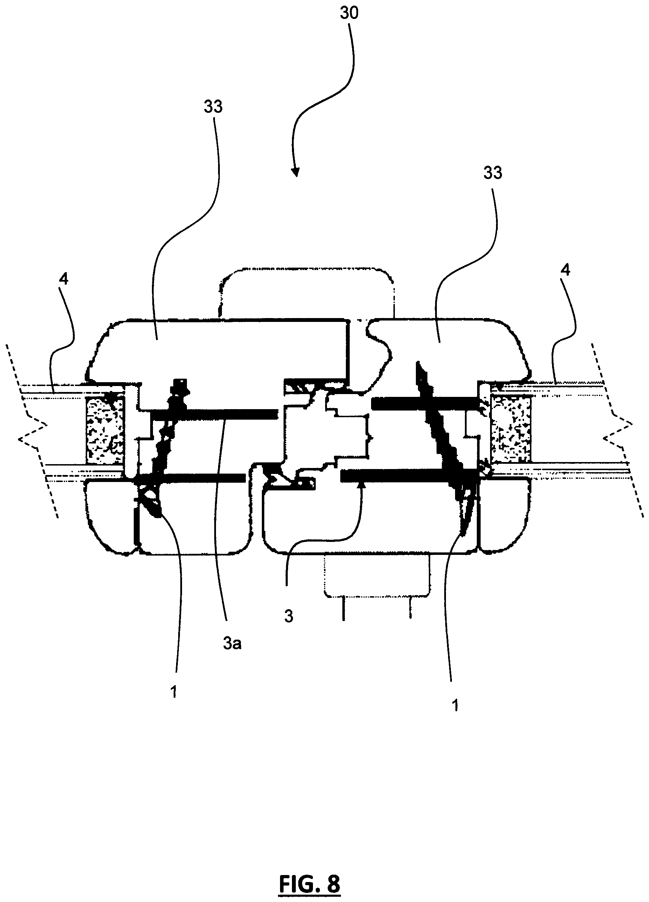

With reference to the examples shown in figures 3 to 10, advantageously each jamb 21,23 and each rail 22,24 of the frame 20 comprises at least one seat 3a for housing the layer 3 of Aerogel. Preferably, the seat 3a extends along the longitudinally direction of X₁,X₂ of the jamb 21,23 and rail 22,24 respectively.

Similarly, each jamb 31,33 and each rail 32,34 of the leaf 30 comprise at least one seat 3b for housing the layer 3 of Aerogel. Preferably, the seat 3b extends along the longitudinally direction of X₁,X₂ of the jamb 31,33 and rail 32,34 respectively.

Preferably, each seat 3a,3b extends substantially along the entire length of the rail 22,24,32,34 and/or of the jamb 21,23,31,33.

Each seat 3a,3b is formed in the rail 22,24,32,34 for a depth comprised between 10 mm and 70 mm along a direction Y-Y orthogonal to the longitudinal direction X₂.

Similarly, each seat 3a,3b is formed in the jamb 21,23,31,33 for a depth comprised between 10 mm and 70 mm along a direction Z-Z orthogonal to the longitudinal direction X₁.

Preferably, each seat 3a,3b is formed in the jamb 21,23,31,33 and/or in the rail 22,24,32,34 for a depth of about 30 mm.

Preferably, in the versions shown in the examples of figure from 7 to 10, the rail 22,24 and/or the jamb 21,23 of the frame 20 has two seats 3a oriented parallel between them. The seat 3a closest to the second lateral face 28 has a depth of about 60 mm. The seat 3a closest to the first lateral face 27 has a depth of about 50 mm.

Similarly, the rail 32,34 and/or the jamb 31,33 of the leaf 30 has two seats 3b oriented parallel to each other and having a depth substantially identical, preferably of about 50 mm.

Seats 3a,3b are positioned substantially centrally with respect to the rails 22,24,32,34 and/or with respect to the jambs 21,23,31,33. They are separated from each other by a distance comprises between 5 mm and 30 mm, preferably about 10 mm.

The seat 3a,3b closest to the first lateral face 27,37 is spaced from the latter by a distance comprises between 10 mm and 30 mm, preferably 18 mm.

The seat 3a,3b closest to the second lateral face 28,38 is spaced from the latter by a distance comprises between 10 mm and 30 mm, preferably 20 mm.

Advantageously, each seat 3a,3b formed in the jamb 21,23,31,33 and/or in the rails 22,24,32,34 of the frame 10 is made at the central layer of the plurality of laminated layers of the closure. In particular, with reference to figure 3, each seat 3a,3b has a thickness less than the thickness of the central laminated layer 21b,24b,31b,34b.

Preferably, each seat 3a,3b is made by milling the central layer 21b,24b,31b,34b. In particular, the milling allows removing material in order to reduce by about half the height of the central layer 21b,24b,31b,34b.

In one version, each seat 3a,3b has a thickness substantially equal to the thickness of the central layer 21b,24b,31b,34b.

In a further version, each seat 3a,3b has a thickness less than the thickness of the central layer 21b,24b,31b,34b.

Preferably, each laminated layer has a thickness comprised between 5 mm and 30 mm, preferably 12 mm.

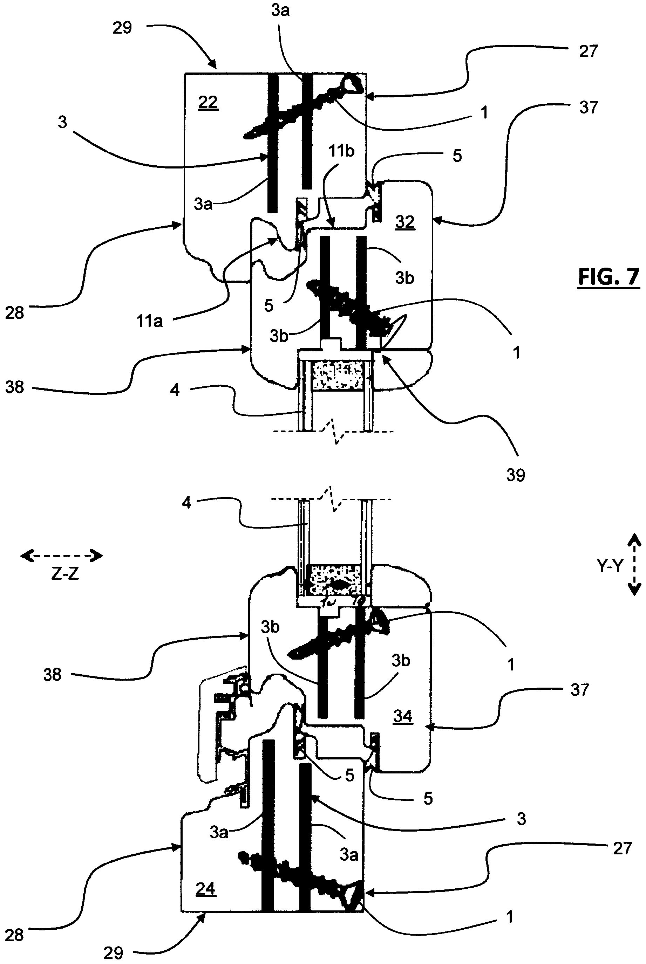

With reference to the example shown in figure 7, the frame rail 22,24 is shaped for receiving in abutment and for shape coupling the rail leaf 32,34. Between the rail frame 22,24 and the rail leaf 32,34 are interposed door seals 5 placed between each shaped groove 11a, 11b of the frame rail 22,24 and leaf rail 32,34.

With reference to the example shown in figures from 3 to 5b, the first lateral face 37 and the second lateral face 38 of each rail and jamb (in this case the rail 31 and the jamb 34) of the leaf 30 are horizontally joined by an inner face 39. Preferably, the seat 3b has an opening for the insertion of the layer 3 of Aerogel at the inner face 39.

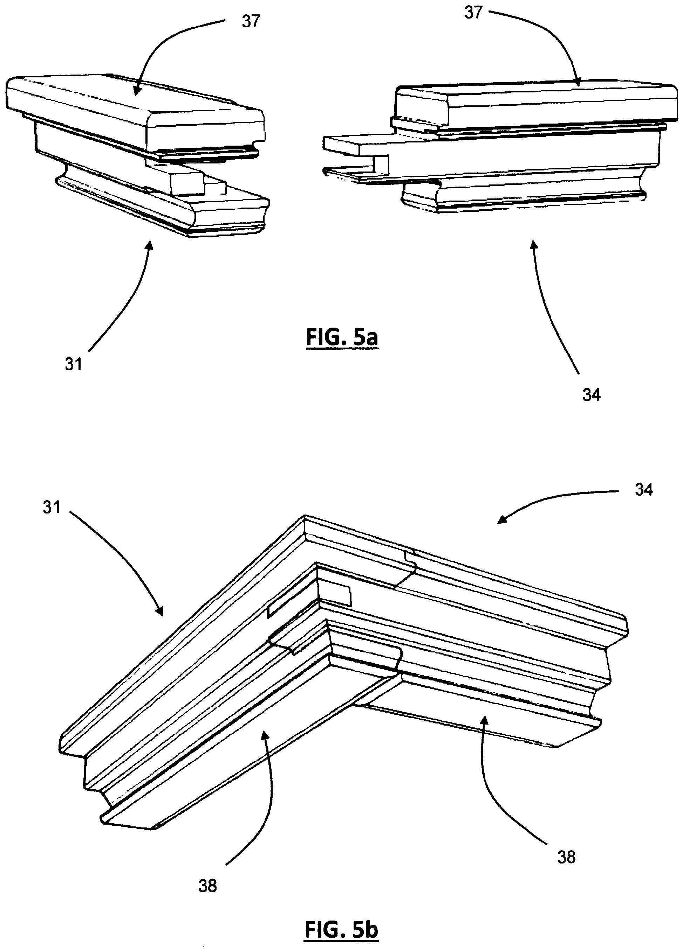

With reference in particular to the example of figure 5a and 5b , the leaf jamb 31 is shaped, at opposite ends, as a "mortise" for receiving the ends of the rail 34, also shaped at opposite ends as a "tenon". Once rails 31,33 and jambs 32,34 are joined together to form the quadrilateral structure of the leaf 30, the seat 3b for housing the layer 3 of Aerogel is extended with continuity of volume. In this way, it will be possible to insert four layers of Aerogel in which, preferably, horizontal layers of Aerogel intended to be inserted in the rails 32,34 are of a shorter length (by about 5% less) than the length of the rail 32,34 so as to leave an appropriate space for the insertion of vertical layers of Aerogel intended to be inserted in the jambs 31,33. The volume of the seat 3b in the leaf 30 will be so completely filled by Aerogel for the achievement of an optimal thermal acoustic insulation.

Preferably, the leaf rail 32,34 has a seat for housing the glass sheet 4 in correspondence of the inner face 39.

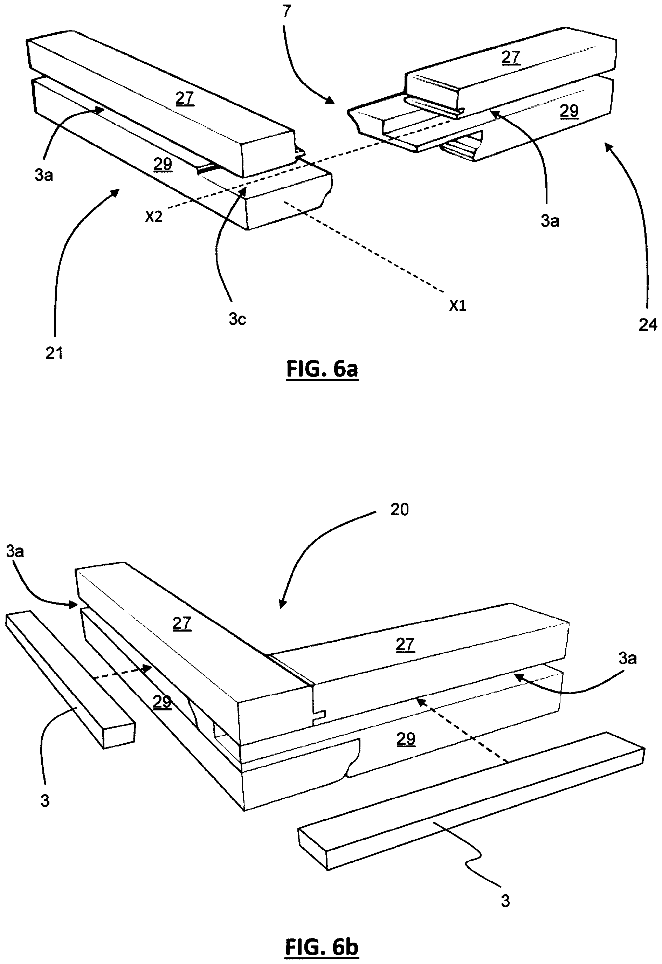

With reference to the example shown in figures 3,6a and 6b, the first lateral face 27 and the second lateral face 28 of each rail and jamb (in this case the jamb 21 and the rail 24) of the frame 20 are joined by a face 29 . Preferably, the seat 3a has an opening for the insertion of the layer 3 of Aerogel at the upper face 29.

It should be noted that at the ends of each jamb 21,23 there is a through opening "mortise" that extends perpendicularly (along the direction X₂, Figure 6a) with respect to the upper face 29 of the frame jamb 21,23. Similarly, at the ends of each frame rail 22,24 there is a projecting "tenon" which extends parallel (along the direction X₁) with respect to the upper face 29 of the frame jamb 21,23.

In particular, with reference to the example shown in Figure 6a, the jamb 21 has a through opening 3c for receiving the projecting element 7 of the rail 24. The through opening 3c is in fluid communication with the seat 3a of the jamb 21,23. Additionally, the through opening 3c extends transversely to the jamb, parallel to the direction X₂. Once jamb 21 and rail 24 are joined together, the projecting element 7 of the rail 24 is interposed between the seat 3a and the through opening 3c dividing the two volumes defined by the seat 3a and by the through opening 3c. In this way, the layer of Aerogel 3 inserted respectively in the jamb 21 and in the rail 24 do not result in contact between them. This discontinuity, preferably at the vertices of the frame 20, allows at the same time to maintain high mechanical strength characteristics. Therefore, the vertical layers of Aerogel which have to be inserted in the jamb 21,23 will be of a shorter length (about 5% less) than the length of the corresponding jambs 21,23.

Preferably, the projecting element 7 of the rail 22,24 has a length such that, when the rail 22,24 is joined to the jamb 21,23, the end of the projecting element 7 is flush with the face 29 of the jamb.

In a version not shown, to increase the resistance of the frame 20, it is possible to have a closing strip (for example L-shaped) to be positioned in correspondence of each vertex of the frame 20 for partial close the seat 3a. For this purpose, the projecting element 7 of the rail 22,24 may have a length such that, when the rail 22,24 is joined to the jamb 21, the end of the projecting element 7 is separated from the face 29 of the jamb of a distance comprises between 1 and 5 cm. In such configuration, the volume of the seat 3a in the frame can present a fluid continuity so it can be completely filled by Aerogel for achieving optimal thermal acoustic insulation.

With reference in particular to the leaf 30 of the closure, thanks to the conformation of the seats 3b of the rail 32,34, Aerogel 3 is in contact with the end part of the glass plate 4. In this way, the transmission of heat is transmitted from the glass plate 4 to the Aerogel allowing a greater acoustic/insulation thermal value. This solution also allows to cushion phenomena of micro vibration of the glass plate 4 and, consequently, of the closure 10.

Preferably, between the free end portion of the layer 3 of Aerogel and the glass plate 4 there is at least a portion of sealing material, preferably transparent acetic silicone.

Advantageously, it should be noted that, before inserting the layer 3 Aerogel, adhesive is deposited in the seat 3a,3b, preferably polyurethane glue or class D4 glue.

In one version, if the Aerogel is in liquid form, it can be cast in the seats 3a,3b of the closure 10 and then dried for a predetermined time.

With reference to the example shown in Figure 7, the closure comprises at least one sealing element 1 to keep the lateral faces 27,28,37,38 of each rail 22,24 and/or of each jamb 21,23 of the frame 20 spaced between them by a substantially fixed distance. In this way, it is ensured that the mechanical consistency of the overall jamb/rail avoiding possible breakage as during the insertion of the layer 3 of Aerogel. Furthermore, the sealing element 1 allows avoiding possible bends of the layers of the jambs/rails due to moisture, temperature changes, etc.

Preferably, the sealing element 1 extends through said rails 22.24 and/or said jambs 21,23 substantially along a transverse direction Z-Z perpendicular to said longitudinal direction X₂.

As shown in the examples of Figure 7 to 9, when more seats are presents, the sealing element 1 extends through each seat 3a,3b, each layer 3 Aerogel and at least part of the rail 22,24 and/or jamb 21,23.

In one version, it is provided the use of a plurality of sealing elements 1 spaced along the entire rail 22,24 and/or jamb 21,23. To do this, it is possible to hole the rail 22,24 and/or the jamb 21,23. The hole is intended for housing of a respective sealing element 1 (e.g., a screw) and may preferably be threaded.

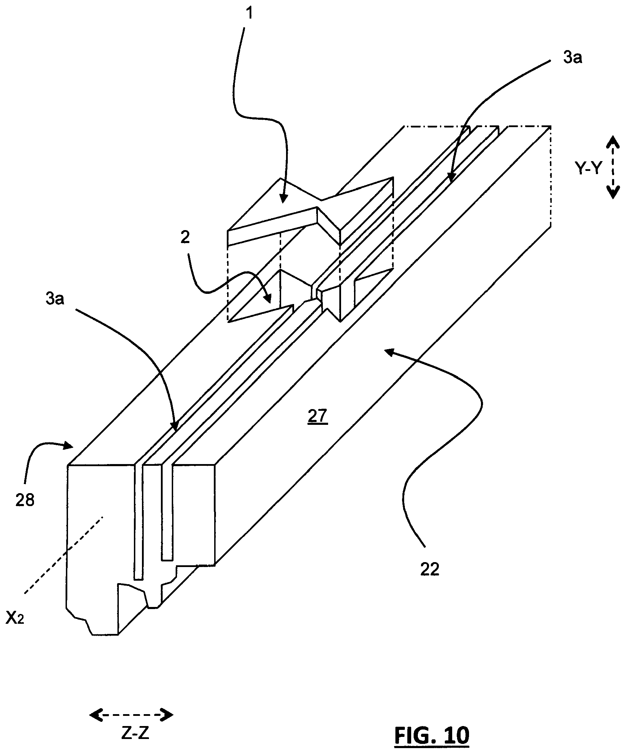

As illustrated in the example of Figure 10, to ensure the compactness of the rails 22,24 and/or of the jambs 21,23, it is possible to realize a swallowtail joining system. In the present case, the sealing element 1 has a double swallowtail shape (or "8") and it is adapted to be inserted into the rail 22 at its upper face 29. The swallowtail sealing element 1 has two external sides substantially parallel and two curved lateral sides inward of the sealing element 1 itself. As illustrated in the example of Figure 10, the upper face 29 of each rail 22,24 and/or jamb 21,23 has a seat 2 for receiving the sealing element 1. Preferably, the swallowtail seat 2 is extended transversely to each rail 22,24 and/or jamb 21,23 between the lateral faces 27,28.

In an embodiment not shown, it is possible to have up to four seats in each rail 22,24 and/or jamb 21,23 of the frame 20.

In a version not shown, the opening of the seat 3a,3b is positioned in correspondence with the groove 11a, 11b.

In a version not shown, the seat 3a, 3b extends in a discontinuous manner substantially along the entire length of the jamb 21,23,31,33 and/or the rail 22,24,32,34.

In a version not shown, the seat 3a, 3b is formed in the jamb 21,23,31,33 and/or the rail 22,24,32,34 along a horizontal direction Z-Z perpendicular to the orthogonal direction Y-Y.

The Applicant has carried out several tests during which it has identified the percentage of improvement of the closure in accordance with the present invention compared to a standard closure in solid wood or laminated:
- Thermal transmittance (UF) of a standard laminated wood closure = 1.4 W/mqk;
- Thermal transmittance (UF) of a closure with a layer of Aerogel: 0.9 W/mqk ÷ 0,5 W/mqk.

With reference to the example shown in Figure 3, the two side leaf rails 33 are pushed together in the door closed configuration. In this configuration, it is possible to note that the presence of one or more layers of Aerogel maintains the possible aesthetic and design variants (and therefore furniture) of the closure unchanged in the building envelope.

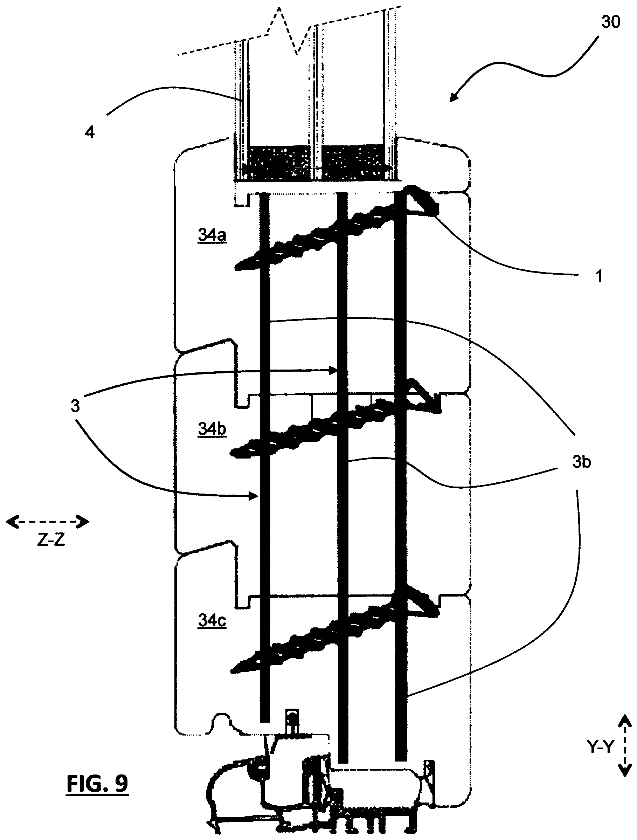

With reference to the example shown in Figure 9, the leaf 30 comprises three leaf rails 34a,34b,34c arranged one above the other. In particular, the seats 3b of the central rail 34b extend for the entire thickness of the rail 34b along the orthogonal direction Y-Y. In this way, each layer 3 of Aerogel of the central rail 34b contacts the respective layer 3 of Aerogel of leaf rails 34a, 34c increasing the overall insulation of the closure 10.

In the following description, there is an example of the method for thermally isolating a rail of a closure in accordance with the present invention.

In the present case, there is a first phase in which the rail/jamb is disposed on a worktop.

Subsequently, by means of suitable tools (e.g. a circular saw), there is a step of milling a face of the rail/jamb along the extending direction of the rail/jamb itself in order to obtain a seat in the rail having a predetermined depth. In particular, the milling is carried out at the central layer of the plurality of laminated layers of the closure.

Advantageously, in the seat of the rail/jamb glue is drained in order to insert for interference, subsequently, at least one layer of Aerogel.

The rail/jamb with Aerogel is left to rest for a predetermined period of time so that the glue is completely dried and allow to the Aerogel is fixed to the rail/jamb without the possibility of any movement.

Preferably, the joining of four rails/jambs is provided between them so as to form a substantially quadrilateral structure. The step of inserting at least a glass plate between the four rails/jambs may be achieved either during production of the closure, and both in the assembly phase of the closure in the building.

In one version, it is possible to put directly in contact the Aerogel with the edge of the glass sheet to increase the insulating power of the closure.

As it can be noted from what described, the closure according to the present invention fulfills the needs and obviates prior art drawbacks as set out in the introduction of this disclosure. Obviously, embodiments and versions described up to here are to be considered as examples and a skilled person will obviously appreciate that a number of changes and variants may be made to the closure of the invention as described hereinbefore to meet specific needs, including for example the combination of these embodiments and versions, without departure from the scope of the invention, as defined in the following claims.

## Claims

1. High thermal insulation closure (10) comprising:
- a frame (20) joinable to a wall of a building and comprising
at least a jamb (21,23) and at least a rail (22,24) longitudinally extended and each defining a first (27) and a second lateral external face (28), each jamb (21,23) and each rail (22,24) of said frame (20) comprising at least one seat (3a) for housing a layer (3) of Aerogel,
- a leaf (30) joined in a hinged manner to said frame (20) and movable with respect to the latter, said leaf (30) comprising
at least a jamb (31,33) and a least a rail (32,34) longitudinally extended and each defining a first (37) and a second lateral external face (38), each jamb (31,33) and each rail (32,34) of said leaf (30) comprising at least one seat (3b) for housing a layer (3) of Aerogel,
**characterized in that** the seats (3a, 3b) are housing a layer of Aerogel and that a closing strip is positioned in correspondence of each vertex of said frame (20) for partial closing said seat (3a) to increase the resistance of the frame (20).

2. Closure (10) according to claim 1, wherein each jamb (21,23,31,33) and each rail (22,24,32,34) of said frame (20) and of said leaf (30) is constituted of no more than three layers of laminated wood.

3. Closure (10) according to claim 2, wherein each single layer of said layers of laminated wood has a seat (3a,3b) for housing said layer (3) of Aerogel.

4. Closure (10) according to claim 3, wherein said seat (3a,3b) for housing said layer (3) of Aerogel has a thickness less than the thickness of said single layer.

5. Closure (10) according to claim 3 or 4, wherein said seat (3a,3b) is formed in the central layer of said layers of laminated wood.

6. Closure (10) according to anyone of the claims from 3 to 5, wherein said seat (3a,3b) is formed for a depth comprised between 10 mm e 40 mm.

7. Closure (10) according to anyone of the claims from 3 to 6, wherein said seat (3b) formed in said leaf (30) has fluid continuity for housing a continuous layer of said Aerogel.

8. Closure (10) according to anyone of the claims from 1 to 7,wherein said first face (27) and said second face (28) are joined by a joining face (29), wherein at each vertex of said frame (20) there is a mortise-tenon join for joining each jamb (21,23) and each rail (22,24) between them, and wherein the end of said tenon (7) extends so in such a way as to be flush with said face (29).

9. Closure (10) according to claim 8, wherein the seat (3a) formed in said frame (20) has a fluid discontinuity at said tenon (7) for housing more separated layers of Aerogel.

## Patentansprüche

1. Verschluss mit hoher Wärmeisolierung (10), umfassend:
- einen Rahmen (20), der mit einer Wand eines Gebäudes verbindbar ist und
mindestens einen Pfosten (21, 23) und mindestens einen Holm (22, 24) umfasst, die sich längslaufend erstrecken und jeweils eine erste (27) und eine zweite laterale Außenfläche (28) definieren, wobei jeder Pfosten (21, 23) und jeder Holm (22, 24) des Rahmens (20) umfassen mindestens eine Auflagefläche (3a) zum Unterbringen einer Schicht (3) aus Aerogel,
- einen Flügel (30), der klappbar mit dem Rahmen (20) und in Bezug auf diesen bewegbar verbunden ist, wobei der Flügel (30)
mindestens einen Pfosten (31, 33) und mindestens einen Holm (32, 34) umfasst, die sich längslaufend erstrecken und jeweils eine erste (37) und eine zweite laterale Außenfläche (38) definieren, wobei jeder Pfosten (31, 33) und jeder Holm (32, 24) des Flügels (30) umfassen mindestens eine Auflagefläche (3b) zum Unterbringen einer Schicht (3) aus Aerogel,
**dadurch gekennzeichnet, dass** die Auflageflächen (3a, 3b) eine Schicht (3) aus Aerogel unterbringen und dass eine Abschlussleiste in Übereinstimmung mit jedem Scheitelpunkt des Rahmens (20) zum teilweisen Abschließen der Auflagefläche (3a) positioniert ist, um die Widerstandsfähigkeit des Rahmens (20) zu erhöhen.

2. Verschluss (10) nach Anspruch 1, wobei jeder Pfosten (21, 23, 31, 33) und jeder Holm (22, 24, 32, 34) des Rahmens (20) und des Flügels (30) aus nicht mehr als drei Schichten aus laminiertem Holz bestehen.

3. Verschluss (10) nach Anspruch 2, wobei jede einzelne Schicht der Schichten aus laminiertem Holz eine Auflagefläche (3a, 3b) zum Unterbringen der Schicht (3) aus Aerogel aufweist.

4. Verschluss (10) nach Anspruch 3, wobei die Auflagefläche (3a, 3b) zum Unterbringen der Schicht (3) aus Aerogel eine Dicke aufweist, die geringer ist als die Dicke der einzelnen Schicht.

5. Verschluss (10) nach Anspruch 3 oder 4, wobei die Auflagefläche (3a, 3b) in der zentralen Schicht der Schichten aus laminiertem Holz ausgebildet ist.

6. Verschluss (10) nach einem der Ansprüche von 3 bis 5, wobei die Auflagefläche (3a, 3b) für eine Tiefe zwischen 10 mm und 40 mm ausgebildet ist.

7. Verschluss (10) nach einem der Ansprüche von 3 bis 6, wobei die Auflagefläche (3b), die in dem Flügel (30) ausgebildet ist, einen Flüssigkeitsdurchgang zum Unterbringen einer durchgängigen Schicht des Aerogels aufweist.

8. Verschluss (10) nach einem der Ansprüche von 1 bis 7, wobei die erste Fläche (27) und die zweite Fläche (28) durch eine Verbindungsfläche (29) verbunden sind, wobei an jedem Scheitelpunkt des Rahmens (20) zum Verbinden jedes Pfostens (21, 23) und jedes Holms (22, 24) eine Nut-Zapfen-Verbindung zwischen diesen vorhanden ist, und wobei das Ende des Zapfens (7) sich auf eine solche Weise erstreckt, dass es bündig mit der Fläche (29) ist.

9. Verschluss (10) nach Anspruch 8, wobei die Auflagefläche (3a), die in dem Rahmen (20) ausgebildet ist, eine Flüssigkeitsunterbrechung am Zapfen (7) zum Unterbringen von mehr separaten Schichten aus Aerogel aufweist.

## Revendications

1. Fermeture à isolation thermique élevée (10) comprenant :
- un cadre (20) pouvant être joint à un mur d'un bâtiment et comprenant
au moins un montant (21,23) et au moins un rail (22,24) en extension longitudinale et définissant chacun une première (27) et une seconde face latérale externe (28), chaque montant (21,23) et chaque rail (22,24) dudit cadre (20) comprenant au moins un siège (3a) pour accueillir une couche (3) d'Aérogel,
- une feuille (30) jointe d'une manière articulée audit cadre (20) et mobile par rapport à ce dernier, ladite feuille (30) comprenant
au moins un montant (31,33) et au moins un rail (32,34) en extension longitudinale et définissant chacun une première (37) et une seconde face latérale externe (38), chaque montant (31,33) et chaque rail (32,34) de ladite feuille (30) comprenant au moins un siège (3b) pour accueillir une couche (3) d'Aérogel,
**caractérisée en ce que** les sièges (3a, 3b) accueillent une couche (3) d'Aérogel et **en ce qu'**une bande de fermeture est positionnée en face de chaque sommet dudit cadre (20) pour la fermeture partielle dudit siège (3a) pour augmenter la résistance du cadre (20).

2. Fermeture (10) selon la revendication 1, dans laquelle chaque montant (21,23,31,33) et chaque rail (22,24,32,34) dudit cadre (20) et de ladite feuille (30) est constitué de pas plus de trois couches de bois stratifié.

3. Fermeture (10) selon la revendication 2, dans laquelle chaque couche individuelle desdites couches de bois stratifié a un siège (3a,3b) pour accueillir ladite couche (3) d'Aérogel.

4. Fermeture (10) selon la revendication 3, dans laquelle ledit siège (3a,3b) pour accueillir ladite couche (3) d'Aérogel a une épaisseur inférieure à l'épaisseur de ladite couche individuelle.

5. Fermeture (10) selon la revendication 3 ou 4, dans laquelle ledit siège (3a,3b) est formé dans la couche centrale desdites couches de bois stratifié.

6. Fermeture (10) selon l'une quelconque des revendications 3 à 5, dans laquelle ledit siège (3a,3b) est formé pour une profondeur comprise entre 10 mm et 40 mm.

7. Fermeture (10) selon l'une quelconque des revendications 3 à 6, dans laquelle ledit siège (3b) formé dans ladite feuille (30) a une continuité fluidique pour accueillir une couche continue dudit Aérogel.

8. Fermeture (10) selon l'une quelconque des revendications 1 à 7, dans laquelle ladite première face (27) et ladite seconde face (28) sont jointes par une face de jonction (29), dans laquelle à chaque sommet dudit cadre (20) il existe un joint à mortaise et tenon pour joindre chaque montant (21,23) et chaque rail (22,24) entre eux, et dans laquelle l'extrémité dudit tenon (7) s'étend de manière à être en affleurement avec ladite face (29).

9. Fermeture (10) selon la revendication 8, dans laquelle le siège (3a) formé dans ledit cadre (20) a une discontinuité fluidique au niveau dudit tenon (7) pour accueillir davantage de couches d'Aérogel distinctes.
